# EUROPEAN PATENT APPLICATION

(11) **EP 3 427 564 A1**
(43) Date of publication of application: **16.01.2019**
(21) Application number: 18164009.5
(22) Date of filing: 26.03.2018
(51) Int. Cl.: A01D 34/28, A01D 41/14

(54) **CONTROL DEVICE FOR CUTTING BARS APPLIED TO A SOY HARVESTING HEAD**

(30) Priority: 14.07.2017 IT 201700079607 U
(71) Applicant: Dominoni S.r.L, 26010 Camisano (Cremona) (IT)
(72) Inventor: DOMINONI, Massimo, I-26010 CAMISANO (Cremona) (IT)
(74) Representative: Lunati & Mazzoni S.r.L.

(57) **Abstract**

There is provided a control device (1) for cutter bars applied to a soybean header (10), wherein the soybean header (10) includes a support structure (11) and the device (1) comprises at least one support (2) comprising a cutting portion (20) and adapted to be movably engaged with the support structure (11) by means of a constraint (3), control means (4) operatively connected to the support structure (11) and the support (2) and adapted to control the rigidity and the movement of the support (2) relative to the support structure (11), wherein the constraint (3) defines an axis of rotation (3a) and is suitable to allow the rotation of the support (2) around the axis of rotation (3a), and wherein the support (2) defines, with the constraint (3), a first class lever in which the constraint (3) is the fulcrum, and the support (2) defines a first portion (21) and a second portion (22), which are separate and define the lever arms, the first portion (21) comprises the cutting portion (20), and wherein the second portion (22) is operatively connected to the control means (4) and the control means (4) are located at the rear of the constraint (3).

## Description

The present invention relates to a control device for cutting bars applied to a soybean harvesting head of the type specified in the preamble of the first claim.

In particular, the present invention relates to a cutter device applicable to the soybean header of a soybean harvesting machine such as, for example, a combine harvester.

As is known, agricultural harvesting machines consist, briefly, of a machine body provided with handling means and a motor connected to one or more harvesting headers at the front.

These harvesting headers may vary depending on the purpose for which they are intended.

For example, sunflower or corn harvesting headers are arranged in the most advanced portion of the agricultural machine, generally a combine harvester, considering the sense and the normal direction of advancement in a straight line, and exhibit a series of row-splitting points, suitable for channelling the plants along predetermined rows.

In fact, preferably, the plants are generally arranged in regular, equally spaced rows so as to facilitate the harvesting by the devices installed on the harvesting headers. Each structure may also comprise bonnets, harvesting chains, milking rollers and stalk chopper assemblies. This structure is repeated in alignment with each row-splitting point, and two adjacent structures define a collection channel suitably coinciding, in use, with the seedling rows.

As regards soybean harvesting, the machines are provided with at least one cutting device suitable to act along the direction of advancement imparted by the handling means.

Preferably, therefore, these apparatuses have a movable, or better said, floating cutter bar adapted to scrape the ground and cut the soybean plants as close as possible to the ground at the stem, thus allowing the harvesting of the pods close to the ground.

These bars follow the movement of the harvesting machine and can also move according to the roughness of the ground and the force to which they are subjected. In particular, this movement is a substantial float of the bars above the ground. Therefore, the float and efficiency of the cutter or soybean bars depend on the rigidity of the structure characterising the bars themselves.

In particular, different configurations are known.

In a first example, flexibility is guaranteed by elastic portions made up of sheets of harmonic material that join the frame to the cutter bar.

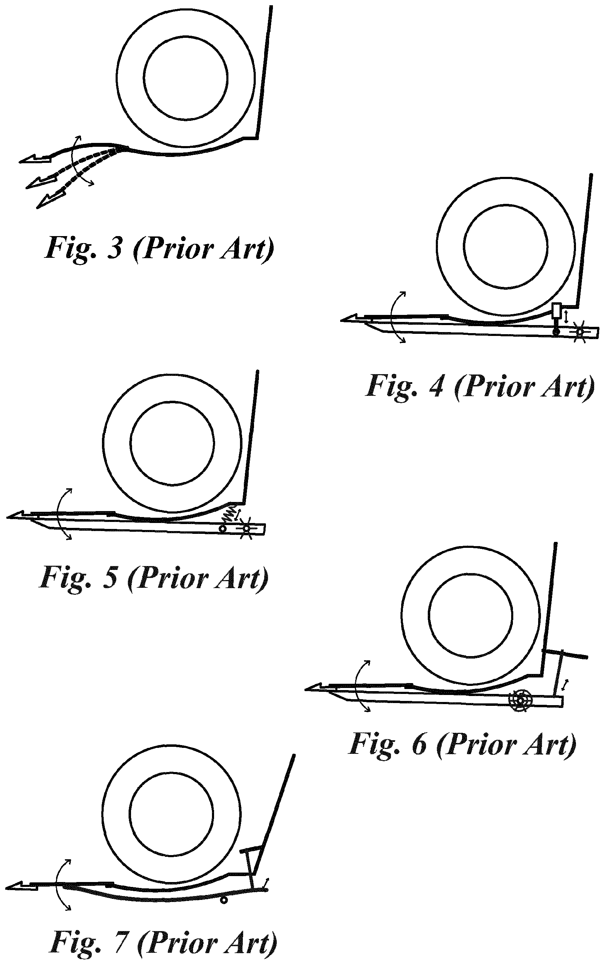

Fig. 3, in particular, shows a configuration with a flexible cutter bar made of harmonic material. In fact, materials of the harmonic type are materials with good rigidity and sufficient elasticity for recovery from deformation, an example of which is harmonic steel; the latter is a high-carbon silicon steel.

In this case, there is no possibility of adjusting the float rigidity.

Other types of bars, instead, have a float rigidity that depends on the structure formed by the same with the header frame.

Fig. 4 shows a flexible bar configuration in which the rigidity is achieved by means of an actuator defined by a hydraulic piston, which is connected to a hydraulic accumulator, arranged at the front with respect to a rotation fulcrum, and allows the blade to lower and rise following rotation around the fulcrum.

In this case, the rigidity of the bar can be varied according to the pressure to which the fluid is subjected inside the hydraulic system.

Another type of configuration is shown in Fig. 5.

This configuration comprises a flexible bar in which the rigidity is achieved by means of an adjustable spring, which is arranged at the front with respect to a rotation fulcrum and allows the blade to lower and rise following rotation around the fulcrum. Fig. 6 shows a known solution comprising a torsional spring arranged at the fulcrum and adjustable by means of a screw arranged at the rear of the fulcrum.

Lastly, Fig. 7 shows a leaf spring configuration.

The described prior art has a few major drawbacks.

In particular, harvesting machines with known configurations are complex and costly.

Furthermore, the above-mentioned configurations do not allow the use of large control means and quick access to these members for controlling the rigidity of the cutter bar, and therefore do not allow easy access, for example, for maintenance and adjustment.

In this context, the technical task underlying the present invention is to devise a control device for cutter bars applied to a soybean header, which is capable of substantially obviating at least some of the above-mentioned drawbacks.

Within the scope of said technical task, a major object of the invention is to obtain a control device, which allows the rigidity of the cutting blade to be conveniently controlled.

Another major object of the invention is to provide a control device, which is simpler and less expensive than the current state of the art for controlling the cutter bar during the normal operation of the soybean harvesting machine.

The technical task and the specified objects are achieved by means of a control device for cutter bars applied to a soybean header as claimed in the appended claim 1. Preferred embodiments are described in the dependent claims.

The features and advantages of the invention will be apparent from the detailed description of preferred embodiments of the invention, with reference to the accompanying drawings, in which:

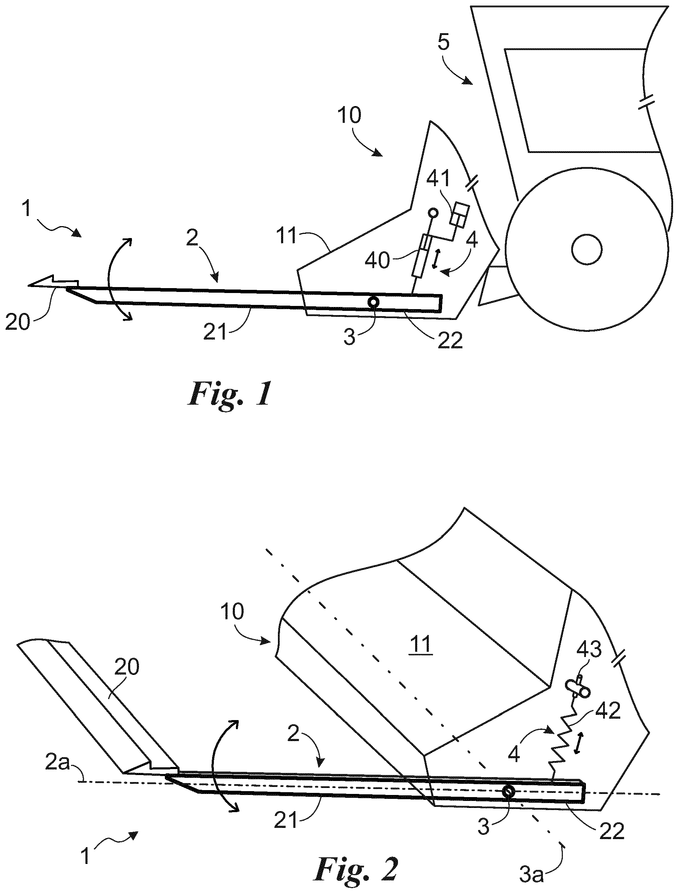

**Fig. 1** shows a side view of the control device according to the invention, wherein the actuator is located at the rear of the fulcrum;
**Fig. 2** illustrates a perspective view of the control device according to the invention, wherein both the elastic member and the adjustment member are arranged at the rear of the fulcrum;
**Fig. 3** is a side view of an elastic, non-adjustable cutter bar according to the prior art;
**Fig. 4** is a side view of a cutter bar with the hydraulic actuator located at the front of the fulcrum according to the prior art;
**Fig. 5** shows a side view of a cutter bar with the elastic member and adjustment member located at the front of the fulcrum according to the prior art;
**Fig. 6** shows a side view of a cutter bar with the elastic member located at the fulcrum and the adjustment member located at the rear of the fulcrum according to the prior art; and
**Fig. 7** shows a side view of a cutter bar with the leaf spring configuration according to the prior art.

In the present document, the measures, values, shapes and geometric references (such as perpendicularity and parallelism), when associated with terms like "about" or other similar terms such as "almost" or "substantially", are to be understood as unless measurement errors or inaccuracies due to production and/or manufacturing defects and, especially, unless a slight difference from the value, measure, shape, or geometric reference with which it is associated. For example, these terms, if associated with a value, preferably indicate a difference not exceeding 10% of the value itself.

Furthermore, when used, terms such as "first", "second", "higher", "lower", "main" and "secondary" do not necessarily identify an order, a priority relationship or a relative position, but can simply be used to distinguish more clearly the different components from each other.

The measurements and the data reported in this text are to be considered, unless otherwise indicated, as carried out in the International Standard Atmosphere ICAO (ISO 2533).

With reference to the Figures, the control device for cutting bars applied to a soy harvesting head according to the invention is indicated as a whole by the numeral **1.**

The control device 1 is preferably associated with a well-known soybean header **10.** This header 10 is well known, suitable to be installed on harvesting machines **5,** such as for example a combine harvester or a similar motorised vehicle, and preferably comprises a support structure **11.**

The support structure 11 preferably consists of the frame of the header 10, and in particular of the frame to which the cutter bar can be constrained.

Therefore, the device 1 comprises at least one support **2,** a constraint **3** and control means **4.**

The support 2 is preferably a support component suitable to support the cutter bar. It also defines a main direction of extension **2a.** This direction 2a substantially represents the direction along which the support 2 extends sectionally. Sectionally, for example, refers to a side view of the support 2 as possibly installed on the header 10.

Therefore, the support 2, for example, sectionally defines a bar extending along the main direction of extension 2a.

The support 2 also preferably comprises a cutting portion **20.**

The cutting portion 20, for example, is at least one blade capable of cutting a plant along the main direction of extension defined by the support 2.

However, the cutting direction of the cutting portion 20 may be different from what is shown here.

The blade, or the plurality of blades, is well known in the state of the art related to the harvesting of soybean plants.

The support 2 is preferably movably engaged with the support structure 11 by means of the constraint 3.

The constraint 3 can be of various types and, for example, can consist of a sleeve adapted to allow translation along a predetermined direction.

It preferably defines an axis of rotation **3a.**

Therefore, the constraint 3 allows, for example, the rotation of the support 2 about the axis of rotation 3a.

In particular, the constraint 3 is preferably a hinge that is suitable to allow the rotation of the support 2 relative to the support structure 11.

Also preferably, the main direction of extension 2a of the support 2 is perpendicular to the axis of rotation 3a.

The device 1, as stated, comprises at least one support 2, and may also comprise two or more supports 2 suitably spaced apart along the axis of rotation 3a and connected to each other by the cutting portion 20.

Preferably, the device 1 comprises a plurality of supports 2 extending along the axis of rotation 3a.

In particular, the supports 2 are present, for example, along the entire extension of the soybean harvesting header 10 and are equally spaced from one another. Preferably, the supports 2 are spaced apart from each other from 5 dm to 1.5 m. The control means 4 are preferably operatively connected to the support structure 11 and at least one support 2.

Preferably, the control means 4 are connected to the supports 2 arranged at the ends of the harvesting header, but control means 4 may also be provided for each support.

The control means 4 are adapted to control the rigidity of the support 2 with respect to the support structure 11.

The control means 4 can be of various kinds. For example, they can facilitate or prevent the movement of the support 2 or control the rotational movement of at least one support 2 according to apparatuses known in the current state of the art.

In detail, the control means 4 are arranged at the rear of the constraint 3. "At the rear" is understood to mean in a retracted position with respect to the direction of advancement of the harvesting machine 5, and therefore of the soybean header 10. Preferably, the control means 4 comprise an elastic member **42** and an adjustment connector **43.**

The adjustment connector 43 is a device adapted to connect the control means 4 to the support structure 11.

It can therefore be any mechanical connector and preferably consists of a known adjusting screw of the type present on soybean headers 10.

Preferably, the adjustment connector 43 is adapted to connect the support structure 11 to the elastic member 42.

The elastic member 42 is connected to the rear portion of the support 2, with respect to the direction of advancement, and to the connector 43, and consists of a linear spring.

Therefore, the rigidity of the rotation of the support 2 about the axis of rotation 3a is defined by the rigidity of the elastic member 42.

Alternatively to the above, the control means 4 may comprise an actuator **40** and an accumulator **41.**

The actuator 40 preferably consists of a hydraulic piston of the type known in the current state of the art.

This piston is preferably constrained at the ends to the rear portion of the support 2 and the support structure 11, respectively.

The rotational rigidity of the support 2 can thus be guaranteed by the pressure to which the fluid is subjected inside the actuator 40, as well as the viscosity of the fluid itself, typically an oil.

The pressure of the actuator 40 can also be ensured and adjusted by means of the accumulator 41 comprising a tank for the storage of the hydraulic fluid and gas. For example, by adjusting the pressure in the circuit varies the force exerted by the pistons on the arms, and therefore the flexibility/rigidity of the cutter bar, until it becomes completely rigid.

This operation can easily be carried out by an operator through a manual pump located on the header 10, or may be implemented through a control network of the harvesting machine 5 or combine harvester.

The support 2 preferably defines, with the constraint 3, a first class lever in which the constraint 3 is the fulcrum and the support 2 defines a first portion **21** and a second portion **22** which are separate and define the lever arms.

In particular, preferably, the first portion 21 comprises the cutting portion 20.

The second portion 22, for example, is operatively connected to the control means 4. In detail, the second portion 22 is preferably connected at one end to one end of the elastic member 42 or to one end of the actuator 40.

The aforesaid control means 4 can thus be operatively connected to a variable point along the second portion 22.

For example, the second portion 22 may comprise a guide, on which a carriage can slide, defining the connection constraint between the control means 4 and the second portion 22.

Or the control means 4 can be operatively connected to a fixed point of the second portion 22.

Preferably, such a fixed point is located at the end opposite the constraint 3 of the second portion 22.

The operation of the control device 1, previously described in structural terms, is as follows.

The support 2 comprises the cutting portion 20 which can be subjected to movements from top to bottom and vice versa due to the effect of the roughness of the harvesting soil surface.

The control means 4 control this movement according to the harvesting requirements that can be defined by the elastic member 42 or by the adjustments that can be carried out, for example, by an operator with reference to the working pressures of the actuator 40.

The control device for cutter bars 1 according to the invention achieves important advantages.

In fact, the control device 1 for the soybean header 10 allows the movement of the support 2 to be controlled, thereby preventing it from moving freely and inadvertently dispersing soybean plants along the ground.

These adjustments are very simplified as the control means 4, arranged in the rear part of the soybean header 10, are easily accessible by an operator.

Furthermore, larger-size control means 4 can be installed on the soybean header 10.

For example, in the case of the elastic member 42, springs with greater lengths and diameters can be installed on the harvesting header.

The latter aspect allows greater control on the flexibility of the cutter bar.

By virtue of the simplicity and accessibility of the control means 4, the device 1 is less expensive and requires reduced maintenance costs compared to the state of the art.

The invention is susceptible of variations falling within the scope of the inventive concept as defined by the claims.

In this context, all details are replaceable by equivalent elements and the materials, shapes and dimensions may be any materials, shapes and dimensions.

## Claims

1. A control device (1) for cutting bars applied to a soy harvesting head (10), said soybean head (10) including a support structure (11), and said device (1) comprising:
- at least one support (2) comprising a cutting portion (20) and movably engaged with said support structure (11) by means of a constraint (3),
- control means (4) operatively connected to said support structure (11) and said support (2) and adapted to control the rigidity and the movement of said support (2) relative to said support structure (11),
- said constraint (3) defining an axis of rotation (3a) and being adapted to allow the rotation of said support (2) around said axis of rotation (3a),
and **characterised in that**
- said support (2) defines, with said constraint (3), a first class lever in which said constraint (3) is the fulcrum and said support (2) defines a first portion (21) and a second portion (22), which are separate and define the arms of said lever,
- said first portion (21) comprising said cutting portion (20),
- said second portion (22) being operatively connected to said control means (4),
- said control means (4) being located at the rear of said constraint (3).

2. The device (1) according to claim 1, wherein said support (2) sectionally defines a bar extending along a main direction of extension (2a) perpendicular to said axis of rotation (3a).

3. The device (1) according to at least one of the preceding claims, comprising at least two supports (2) spaced apart along said axis of rotation (3a) and connected to each other by said cutting portion (20).

4. The device (1) according to at least one of the preceding claims, wherein said cutting portion (20) comprises at least one blade capable of cutting a plant along said main direction of extension (2a).

5. The device (1) according to at least one of the preceding claims, wherein said constraint (3) is a hinge that is suitable to only allow the rotation of said support (2) relative to said support structure (11).

6. The device (1) according to at least one of the preceding claims, wherein said control means (4) comprise an actuator (40) and an accumulator (41), said actuator (40) comprising a hydraulic piston of the type known in the current state of the art, and said accumulator (41) being of the hydraulic type and adapted to adjust the pressure of the fluid inside said actuator (40).

7. The device (1) according to at least one of the preceding claims, wherein said control means (4) comprise an elastic member (42) and an adjustment connector (43), said elastic member (42) being a well-known linear spring and said adjustment connector (43) being an adjusting screw which is suitable to connect said elastic member (42) to said support structure (11) and allow the adjustment of the rigidity of said cutting device (1).

8. The device (1) according to at least one of the preceding claims, wherein said control means (4) are operatively connected to a variable point along said second portion (22).

9. The device (1) according to at least one of the preceding claims, wherein said control means (4) are operatively connected to a fixed point located at the end opposite to said constraint (3) of said second portion (22).

10. A soy head (10) comprising the control device (1) according to at least one of the preceding claims.
